(19) **Europäisches Patentamt European Patent Office Office européen des brevets**

(11) **EP 1 608 860 B1**

(12) **EUROPEAN PATENT SPECIFICATION**

(45) Date of publication and mention of the grant of the patent:
**23.03.2016 Bulletin 2016/12**

(51) Int Cl.:
*F02D 41/02* (2006.01)     *F01N 3/023* (2006.01)
*F01N 9/00* (2006.01)

(21) Application number: **04718287.8**

(22) Date of filing: **08.03.2004**

(86) International application number:
**PCT/EP2004/002329**

(87) International publication number:
**WO 2004/081359 (23.09.2004 Gazette 2004/39)**

(54) **PROCESS FOR THE REMOVAL OF PARTICULATES FROM THE EXHAUST GAS OF AN INTERNAL COMBUSTION ENGINE**

VERFAHREN ZUM ENTFERNEN VON TEILCHEN AUS DEN ABGASEN EINER VERBRENNUNGSKRAFTMASCHINE

PROCEDE D'EXTRACTION DE PARTICULES DES GAZ D'ECHAPPEMENT D'UN MOTEUR A COMBUSTION INTERNE

(84) Designated Contracting States:
**AT BE BG CH CY CZ DE DK EE ES FI FR GB GR HU IE IT LI LU MC NL PL PT RO SE SI SK TR**

(30) Priority: **11.03.2003 IT TO20030179**

(43) Date of publication of application:
**28.12.2005 Bulletin 2005/52**

(73) Proprietor: **FIAT AUTO S.p.A.**
**10135 Torino (IT)**

(72) Inventors:
• **RELLECATI, Pierluigi**
**I-10135 Torino (IT)**

• **BARUCCHI, Enrico**
**I-10133 Torino (IT)**
• **IMARISIO, Roberto**
**I-10094 Giaveno (TO) (IT)**

(74) Representative: **Quinterno, Giuseppe et al**
**Jacobacci & Partners S.p.A.**
**Corso Emilia 8**
**10152 Torino (IT)**

(56) References cited:
**EP-A- 0 859 132     EP-A- 1 108 866**
**EP-A- 1 195 508     EP-A- 1 203 877**
**US-A- 5 319 930**

**Description**

The present invention relates to a process for the removal of particulates from the exhaust gas of an internal combustion engine, in particular a diesel engine of a motor vehicle, provided with a plurality of fuel injectors, of the kind defined in the preamble of claim 1.

EP 0 859 132 A1 discloses a process or method of this kind in which different engine "operating zones" are preliminarily defined for the engine of a car provided with a navigation system and a receiver capable of receiving traffic congestion forecast information.

Before the car is started to reach a desired destination, the route searched by the navigation system is divided into a number of route sections. For each route section an amount of generated particulate is predicted, and the corresponding engine operating zone is determined still while the car is not running.

After the car begins running, on the basis of the actual values of some vehicle parameters an electronic control unit checks whether the actual behaviour of the car actually corresponds to the previously predicted particulate generation schedule. In the negative case, the particulate generation outline is rescheduled.

EP 1 195 508 discloses a particulate filter regeneration method wherein a vehicle mission profile is determined as a function of the detected combustion chamber pressure and the engine speed, and as a function of the temperature of the exhaust gases and the vehicle speed.

EP 1 108 866 A2 discloses a system for the determination of the particulates accumulated in a filter in a motor vehicle provided with a diesel engine. A control unit receives signals indicating the injected fuel quantity and the engine speed, and from a characteristics diagram determines the corresponding quantity of particulate accumulated in the filter in a time interval.

One object of the present invention is to provide an improved process of the initially defined kind.

This object is achieved according to the invention with a process the characteristics of which are defined in the annexed Claim 1.

Further characteristics and advantages of the invention will become apparent from the following detailed description, given purely by way of non-limitative example, with reference to the attached drawings, in which:

Figure 1 is a systematic representation of a system operating according to the invention;
Figure 2 is a graph which qualitatively demonstrates, as a function of the speed of rotation of the engine n plotted on the abscissa, the quantity g of fuel injected into the engine, for the various types of journey or trip of a motor vehicle;
Figure 3 is a block diagram which illustrates one control mode for controlling the quantity of fuel injected into the cylinders of the engine in a post-injection phase, in a process according to the invention; and
Figure 4 is a further diagram which shows, as a function of the type t* of regeneration used, plotted on abscissa, the variation of a function which represents concentration of particulates in the filter during a regeneration phase.

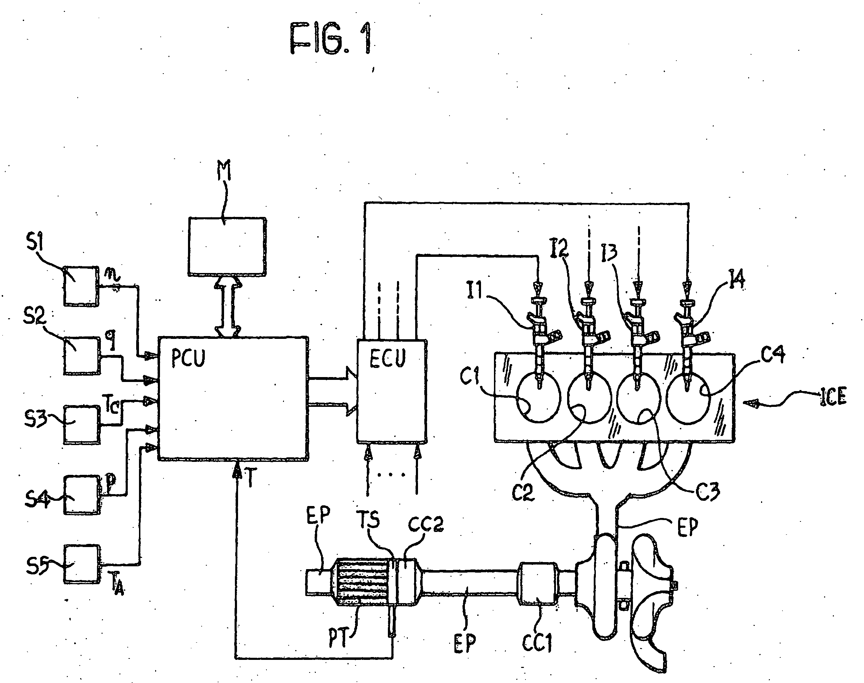

With reference to the drawings, in Figure 1 the reference number ICE generally indicates an internal combustion engine, for example a diesel cycle engine. In the illustrated example this engine has four cylinders C1-C4 disposed in line, but the invention is not limited to this configuration.

Each of the cylinders of the engine ICE is associated with a respective injector I1-I4, controlled by an electronic unit ECU.

The engine ICE is associated with an exhaust manifold EP, in which, in the illustrated example, and in a manner known per se, are fitted first and second catalytic converters CC1 and CC2. Associated with the second, which is disposed downstream of the first, is a particulate filtration device indicated PT. An electric temperature sensor TS is associated with the input of the filter PT to provide, in operation, electrical signals indicative of the temperature of the exhaust gas at the inlet of this filter.

The sensor TS is connected to an electronic processor and control unit PCU. In the exemplary embodiment illustrated in Figure 1 this unit PCU is shown as a separate and distinct element from the unit ECU which controls the engine injectors. It will be apparent to those skilled in the art, however, that in place of two physically separate interconnected units, it is possible to make use of a single electronic unit arranged to perform the functions of both the units ECU and PCU.

To the unit PCU are further connected devices S1-S5 which provide it with electrical signals indicative of the speed of rotation n (number of revolutions per unit of time) of the engine ICE, the quantity q of fuel injected into the cylinders of the engine ICE, the temperature $T_c$ of the coolant liquid of the engine ICE, the atmospheric pressure P and the temperature $T_A$ of the aspirated air.

Memory devices M are also associated with the unit PCU. Although in Figure 1 these memory devices are illustrated as separate from the unit PCU it will be apparent to the man skilled in the art that such memory devices could be integrated in the PCU memory or even in the unit ECU.

The processing and control unit PCU is arranged to perform, in cooperation with unit ECU, filter regeneration phases of the filter PT by controlling the fuel injectors I1-I4 in a predetermined manner as a function of the signals provided by the devices S1-S5 and TS in such a way to cause a controlled increase in the temperature of the exhaust gas so as to cause combustion of the particulates accumulated in the said filter.

In the above-described system the processing and control unit PCU is, for this purpose, arranged to identify in operation the type of journey or trip in which the motor vehicle is engaged at any instant from among a plurality of predetermined types of journey or trip. The identification of the type of journey or trip is performed of the basis of the signals provided from the devices S1 and S2, that is to say as a function of the instantaneous speed of rotation n of the engine ICE and of the quantity of fuel q injected into the said engine.

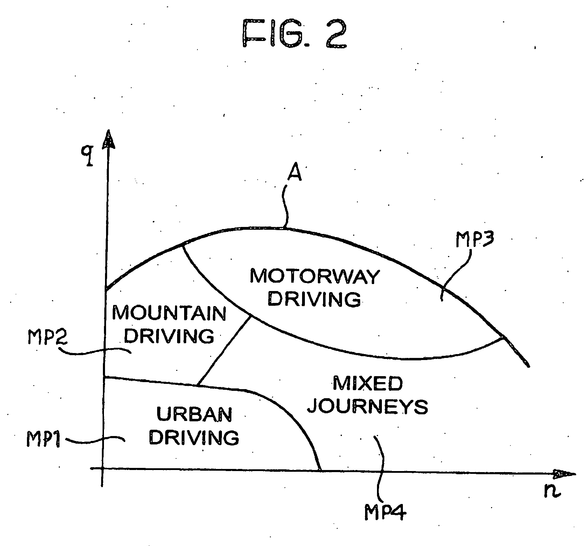

The type of journey or trip which the motor vehicle is making is determined on the basis of the results of a statistical analysis, and on the basis of a diagram of the type qualitatively illustrated in Figure 2. In this figure the quantity q of fuel injected is plotted on the ordinate as a function of the speed of rotation n of the engine. In this figure the curve indicated A is the curve corresponding to operating condition of the engine with the accelerator pressed 100%, that is to say the curve corresponding to the maximum delivery of power by the engine ICE.

The region underlying the curve A is divided, (on the basis of experimental detections) into a plurality of ranges of values each corresponding to the profile of a particular type of journey or trip of the motor vehicle. In the illustrated example there are indicated substantially four ranges indicated MP1-MP4 corresponding, in order, a type of journey or trip in the city ("urban driving"), a mountain journey, motorway driving and, finally the so-called mixed journeys.

A diagram of the type illustrated by way of example in Figure 2 is memorised in the system, for example in the memory devices M associated with the unit PCU, for example in the form of the table or map. In operation the unit PCU is arranged to acquire the signals indicative of the speed of rotation n and of the injected quantity q of fuel, and to average the corresponding values, acquired for example each 20 ms within the ambit of a movable time window, for example of 5 minutes. On the basis of the averaged values thus obtained the unit PCU determines the type of trip or current journey profile MPi (with i=1, ..., 4 in the example of Figure 2).

The processing and control unit PCU is, moreover, set up to calculate, as a function of a predefined estimate, and in dependence on the type of journey or trip Mpi, the quantity q of particulate material gradually accumulated in the filter PT, and to start the regeneration phase of this filter when the quantity of particulates accumulated in the filter, as calculated, exceeds the predetermined threshold.

The unit PCU in particular is arranged to calculate the quantity of particulates Q accumulated in the filter PT on the basis of a predetermined function I indicative of the rate of accumulation (for example in g/h) of particulates in the filter PT, predetermined and memorised for the said type of journey or trip MPi of the motor vehicle. It has been found in this way that the accumulation of particulates in the filter is an essentially linear process over time, depending on the various conditions of use of the engine of the motor vehicle, that is to say to the profile of the various types of journey or trip which the motor vehicle is making. The function $I=I\,(t, MP_i)$ is conveniently determined in a statistical manner and is memorised in the system as a function of the various types of journey the vehicle may make.

In operation, the quantity Q of particulates accumulated at each instant is then calculated by the unit PCU as an integral over time of the various accumulation rates upon variation of the journey or trip profile of the vehicle, essentially according to a relation of the type:

$$Q = \int^t_0 I\,(t;\ Mpi)\ dt + Q_0 \qquad\qquad (1)$$

where t is time, and $Q_0$ represents the so-called initial condition determined by the quantity of particulates remaining in the filter PT at the end of the preceding regeneration phase.

When the quantity Q of accumulated particulates exceeds the predetermined threshold the unit PCU causes commencement of a new regeneration phase.

Conveniently the comparison threshold is predetermined with prefixed values according to the type of journey or trip which the motor vehicle is making at the time.

In the regeneration phase a spontaneous combustion of the particulates takes place as soon as and as long as the exhaust gas of the engine, at the inlet of the filter itself, reaches temperatures greater than a predetermined value, for example 650°C, in the presence of a sufficient percentage of oxygen.

The processing and control unit PCU is arranged to control the temperature in the filter itself during a filter regeneration phase of the filter PT, causing a controlled increase of the exhaust gas temperature resulting in combustion of the particulates accumulated in the filter.

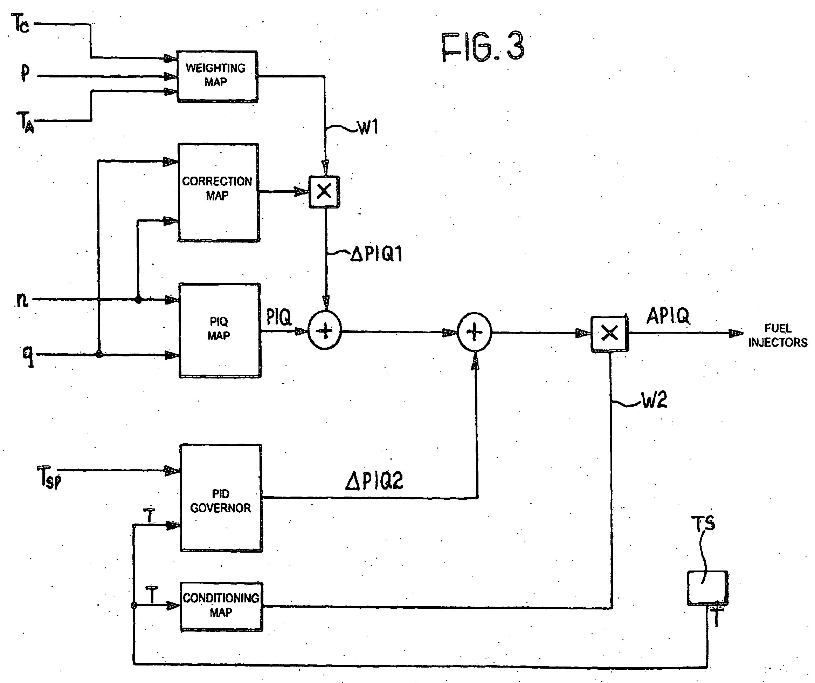

Control of the temperature during the regeneration process of the filter PT can conveniently take place according to the diagram of Figure 3. In conformity with this diagram the unit PCU is arranged to make an open loop determination of the partial quantity of fuel PIQ to be introduced into the cylinders C1-C4 of the engine ICE in a post-injection phase, in dependence on the speed of rotation n of the engine and the overall quantity q of fuel to be injected into the cylinders at each injection. The determination of the partial quantity PIQ of fuel to be injected in the post injection phase is determined for example by means of a map (map PIQ) stored in the memory devices M.

The unit PCU is moreover arranged to modify the said partial quantity of fuel PIQ to be injected into the engine in the post injection phase, by adding/subtracting a first correction quantity ΔPIQ1 determined according to a mapped function of the speed of rotation n of the engine and the quantity q of fuel injected into the cylinders "weighted" as a function of the values assumed by some ambient quantities (such as the air temperature $T_A$ and the atmospheric pressure P) and engine quantities (such as temperature $T_c$ of the engine coolant), via a factor W1 obtained by means of a suitable pre-memorised weighting map. The quantity PIQ is further modified by adding/subtracting from it a second correction quantity ΔPIQ2, generated in an open loop determination as a function of the difference between the effective temperature T of the exhaust gas at the inlet of the filter PT (detected by means of the sensor TS) and a predetermined reference temperature $T_{sp}$. The correction quantity ΔPIQ2 can conveniently be determined by means of a PID governor (Proportional-Integral-Derivative).

Subsequently, following a further conditioning through a factor W2 obtained from a suitable map as a function of the value of the temperature T of the exhaust gas, the effective partial quantity of fuel ΔPIQ to be injected into the engine in the post-injection phase during the regeneration process of the filter is obtained.

The process and control unit PCU is arranged to end a regeneration phase of the filter PT after a predetermined working time t* has passed since the beginning of this regeneration, which is conveniently variable in a predetermined manner as a function of the type of journey or trip MPi made by the motor vehicle during the regeneration. The working time t* is defined as the percentage of time for which the temperature in the filter PT is effectively above the predetermined value (for example 650°).

The unit PCU is further arranged to calculate the residual quantity $Q_0$ of unburnt particulates in the filter, at the end of a filter regeneration phase, according to a further predetermined estimation function, and to assume this residual quantity as the initial value for the calculation of the quantity of particulates accumulated in the filter starting from the end of this regeneration phase.

The residual particulates at the completion of regeneration is conveniently calculated in a variable manner as a function of the type of journey or trip made during regeneration.

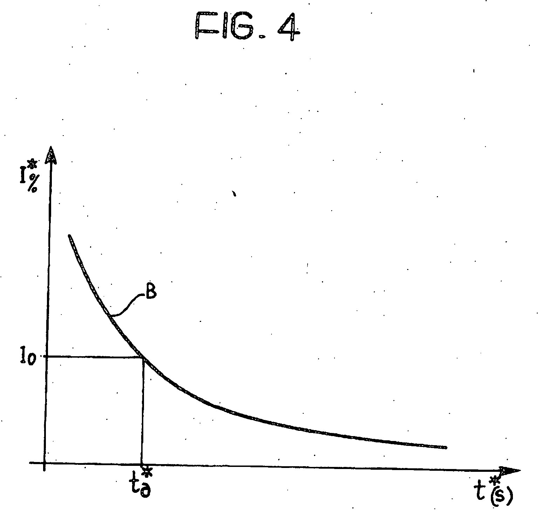

If a regeneration phase is interrupted the residual particulates can be calculated on the basis of an estimation function such as that (essentially a decreasing exponential) which is qualitatively shown in Figure 4.

In this Figure, along the ordinate is plotted the rate of percentage decrease I* of the particulates in the filter during regeneration upon variation of the regeneration working time t* which is plotted along the abscissa.

This function can also be utilised in particular to estimate the residual quantity of unburnt particulates in the filter PT when, during a filter regeneration phase, the motor ICE is switched off before completion of this regeneration phase.

Naturally, the principle of the invention remaining the same, the embodiments and details of construction can be widely varied with respect to what has be described and illustrated purely by way of non-limitative example, without by this departing from the ambit of the invention as defined in the annexed claims.

**Claims**

1. A process for the removal of particulates from the exhaust gas of an internal combustion engine, in particular a diesel engine (ICE) of a motor vehicle provided with a plurality of fuel injectors (I1-I4), the process comprising the operations of:

    arranging a filter (PT) in the exhaust duct (EP) of the engine (ICE) operable to retain the particulates contained in the exhaust gas;
    generating, by indicator means (S1-S5), electrical signals indicative of the values of operating parameters (NQ) of the engine (ICE);
    performing, by processor and control means (PCU, ECU) filter regeneration phases of the filter (PT) in a predetermined manner as a function of the signals provided by the said indicator means (S1-S5) in such a way as to cause an increase in the temperature of the exhaust gas so as to cause a combustion of the particulates accumulated in the filter (PT);
    the process comprising further the operations of:

        identifying, by means of the said processor and control means (PCU, ECU), the type of journey or trip (MPi) of the motor vehicle from among a plurality of predefined types of journey or trip (MP1-MP4);
        calculating by means of the said processor and control means (PCU, ECU) and according to a predefined estimation function in dependence on the instantaneous type of journey or trip (MPi) the quantity of particulates (Q) gradually accumulated in the filter (PT); and

starting a filter regeneration phase of the filter (PT) when the calculated quantity (Q) of particulates accumulated in the filter (PT) exceeds a predetermined threshold; the process being **characterized in that**

said regeneration phases of the filter (PT) are performed by controlling the injectors (I1-I4) of the engine (ICE), and **in that**

the said indicator means (S1-S5) are operable to provide to the processor and control means (PCU, ECU) electrical signals indicative of the instantaneous values of the speed of rotation (n) of the engine (ICE) and the quantity (q) of fuel injected into the engine (ICE); and

the processor and control means (PCU, ECU) are arranged to recognise the current type of journey or trip (MPi) of the motor vehicle on the basis of instantaneous values of the speed of rotation (n) of the engine (ICE) and of the quantity (q) of fuel injected and calculate the quantity (Q) of particulates accumulated in the filter (PT) on the basis of a predetermined function (I) indicative of the rate of accumulation of the particulates (PT) memorised for the said types of journey or trip (MPi) of the motor vehicle.

2. A process according to Claim 1, in which the said threshold is determined by predetermined values according to the instantaneous type of journey or trip (MPi) of the motor vehicle.

3. A process according to Claim 1 or Claim 2, in which the said function (I) indicative of the rate of accumulation is a linear function in time which is different for each type of journey or trip (MPi) of the motor vehicle.

4. A process according to any of Claims 1 to 3, in which the said processor and control means (PCU, ECU) are arranged to terminate a filter regeneration phase of the filter (PT) after a predetermined working time (t*) has elapsed since commencement, which time is variable in a predetermined manner as a function of the types of journey or trip (MPi) made by the motor vehicle during regeneration.

5. A process according to Claims 1 and 4, in which the said processor and control means (PCE, ECU) are arranged to calculate, at the end of a filter regeneration phase of the filter (PT) the residual quantity of unburnt particulates in the filter (PT) as a function of the type of journey or trip made during regeneration, and to assume this residual quantity as the initial value $(Q_0)$ for the calculation of the quantity (Q) of particulates accumulated in the filter starting from the end of this regeneration phase.

6. A process according to Claim 5, in which the said processor and control means (PCU, ECU) are arranged to be able to calculate, by means of a predetermined estimation function, the residual quantity of unburnt particulates $(Q_0)$ in the filter (PT) in the case of interruption of a filter regeneration phase (PT) or when the engine (ICE) is switched off during a filter regeneration phase (PT).

**Patentansprüche**

1. Verfahren zur Entfernung von Partikeln aus dem Abgas einer Verbrennungskraftmaschine, insbesondere eines Dieselmotors (ICE) von einem Kraftfahrzeug, der mit einer Vielzahl von Kraftstoff-Einspritzdüsen (11-14) versehen ist, wobei das Verfahren die Arbeitsgänge umfasst:

Anordnen eines Filters (PT) in dem Auslasskanal (EP) des Motors (ICE), der betriebsfähig ist, um die in dem Abgas enthaltenen Partikel zurückzuhalten;

Erzeugen, durch Anzeigeeinrichtungen (S1-S5), von elektrischen Signalen, die auf die Werte von Betriebsparametern (NQ) des Motors (ICE) hinweisen;

Durchführen von Filterregenerierungsphasen des Filters (PT) durch Prozessor- und Steuereinrichtungen (PCU, ECU) in einer vorgegebenen Art und Weise als eine Funktion der durch die Anzeigeeinrichtungen (S1-S5) bereitgestellten Signale, derart, dass eine Erhöhung der Temperatur des Abgases herbeigeführt wird, damit eine Verbrennung der in dem Filter (PT) angesammelten Partikel bewirkt wird;

das Verfahren des Weiteren die Arbeitsgänge umfasst:

Erkennen, durch die Prozessor- und Steuereinrichtungen (PCU, ECU), des Typs der Strecke oder Fahrt (MPi) des Kraftfahrzeugs aus einer Vielzahl vorbestimmter Typen der Strecke oder Fahrt (MP1-MP4) heraus;

Berechnen der in dem Filter (PT) stufenweise angesammelten Partikelmenge (Q) durch die Prozessor- und Steuereinrichtungen (PCU, ECU) und nach einer vorbestimmten Schätzfunktion in Abhängigkeit vom augenblicklichen Typ der Strecke oder Fahrt (MPi); und

Starten einer Filterregenerierungsphase des Filters (PT), wenn die berechnete Menge (Q) von in dem Filter (PT) angesammelten Partikeln einen vorbestimmten Schwellenwert überschreitet; wobei das Verfahren **dadurch gekennzeichnet ist, dass**

die Regenerierungsphasen des Filters (PT) durch Steuerung der Einspritzdüsen (11-14) des Motors (ICE) durchgeführt werden, und dadurch, dass

die Anzeigeeinrichtungen (S1-S5) betriebsfähig sind, um den Prozessor- und Steuereinrichtungen (PCU, ECU) elektrische Signale zu liefern, die die momentanen Werte der Drehzahl (n) des Motors (ICE) und der in den Motor (ICE) eingespritzten Kraftstoffmenge (q) anzeigen; und

die Prozessor- und Steuereinrichtungen (PCU, ECU) angeordnet sind, um den aktuellen Typ der Strecke oder Fahrt (MPi) des Kraftfahrzeugs auf der Basis von momentanen Werten der Drehzahl (n) des Motors (ICE) und der eingespritzten Kraftstoffmenge (q) zu erkennen und die Menge (Q) von in dem Filter (PT) angesammelten Partikeln auf der Basis einer vorgegebenen Funktion (I) zu berechnen, die die Ansammlungsmenge der Partikel (PT) pro Zeiteinheit, die für die Typen der Strecke oder Fahrt (MPi) des Kraftfahrzeugs festgehalten ist, angibt.

2. Verfahren nach Anspruch 1, bei dem der Schwellenwert festgelegt wird durch vorgegebene Werte nach dem momentanen Typ der Strecke oder Fahrt (MPi) des Kraftfahrzeugs.

3. Verfahren nach Anspruch 1 oder Anspruch 2, bei dem die Funktion (I), die die Ansammlungsmenge pro Zeiteinheit angibt, eine lineare Funktion der Zeit ist, die für jeden Strecken- oder Fahrttyp (MPi) des Kraftfahrzeugs unterschiedlich ist.

4. Verfahren nach einem der Ansprüche 1 bis 3, bei dem die Prozessor- und Steuereinrichtungen (PCU, ECU) angeordnet sind, um eine Filterregenerierungsphase des Filters (PT) zu beenden, nachdem eine vorgegebene Arbeitszeit ($t^*$) seit Beginn verstrichen ist, wobei die Zeit in einer vorgegebenen Weise veränderlich ist als eine Funktion der Strecken- oder Fahrttypen (MPi), die sich durch das Kraftfahrzeug während einer Regenerierung ergeben.

5. Verfahren nach den Ansprüchen 1 und 4, bei dem die Prozessor- und Steuereinrichtungen (PCE, ECU) angeordnet sind, um am Ende einer Filterregenerierungsphase des Filters (PT) die restliche Menge unverbrannter Partikel in dem Filter (PT) als eine Funktion des Strecken- oder Fahrttyps, der sich während einer Regenerierung ergibt, zu berechnen und diese restliche Menge als den Ausgangswert ($Q_0$) für die Berechnung der Menge (Q) von in dem Filter angesammelten Partikeln, beginnend vom Ende dieser Regenerierungsphase, anzunehmen.

6. Verfahren nach Anspruch 5, bei dem die Prozessor- und Steuereinrichtungen (PCU, ECU) angeordnet sind, um die restliche Menge unverbrannter Partikel ($Q_0$) in dem Filter (PT) im Fall einer Unterbrechung einer Filterregenerierungsphase (PT) oder wenn der Motor (ICE) während einer Filterregenerierungsphase (PT) abgeschaltet ist, mittels einer vorgegebenen Schätzfunktion berechnen zu können.

## Revendications

1. Procédé d'extraction de particules des gaz d'échappement d'un moteur à combustion interne, en particulier un moteur diesel (ICE) d'un véhicule à moteur muni de plusieurs injecteurs de carburant (I1-I4), lequel procédé comprend les opérations suivantes :

disposition d'un filtre (PT) dans la conduite d'échappement (EP) du moteur (ICE), qui peut fonctionner pour retenir les particules contenues dans les gaz d'échappement ;

génération, par des moyens indicateurs (S1-S5), de signaux électriques indiquant les valeurs de paramètres de fonctionnement (NQ) du moteur (ICE) ;

exécution, par des moyens de traitement et de contrôle (PCU, ECU), de phases de régénération du filtre (PT) d'une manière prédéterminée en fonction des signaux fournis par lesdits moyens indicateurs (S1-S5), de manière à provoquer une élévation de la température des gaz d'échappement afin de provoquer une combustion des particules accumulées dans le filtre (PT) ;

le procédé comprenant en outre les opérations suivantes :

identification, au moyen desdits moyens de traitement et de contrôle (PCU, ECU), du type de parcours ou de trajet (MPi) du véhicule à moteur parmi plusieurs types prédéfinis de parcours ou de trajet (MP1-MP4) ;
calcul, au moyen desdits moyens de traitement et de contrôle (PCU, ECU) et selon une fonction d'estimation prédéfinie dépendant du type instantané de parcours ou de trajet (MPi), de la quantité de particules (Q) accumulées graduellement dans le filtre (PT) ; et
lancement d'une phase de régénération du filtre (PT) lorsque la quantité calculée (Q) de particules accumulées dans le filtre (PT) dépasse un seuil prédéterminé ;

**caractérisé en ce que** lesdites phases de régénération du filtre (PT) sont exécutées en contrôlant les injecteurs (I1-I4) du moteur (ICE), et
**en ce que** lesdits moyens indicateurs (S1-S5) peuvent fonctionner de manière à fournir aux moyens de traitement et de contrôle (PCU, ECU) des signaux électriques indiquant les valeurs instantanées du régime (n) du moteur (ICE) et de la quantité (q) de carburant injectée dans le moteur (ICE) ; et
les moyens de traitement et de contrôle (PCU, ECU) sont disposés de façon à reconnaître le type actuel de parcours ou de trajet (MPi) du véhicule à moteur sur la base de valeurs instantanées du régime (n) du moteur (ICE) et de la quantité (q) de carburant injecté et à calculer la quantité (Q) de particules accumulées dans le filtre (PT) sur la base d'une fonction prédéterminée (I) indiquant la vitesse d'accumulation des particules (PT) mémorisée pour lesdits types de parcours ou de trajet (MPi) du véhicule à moteur.

2.  Procédé selon la revendication 1, dans lequel ledit seuil est déterminé par des valeurs prédéterminées selon le type instantané de parcours ou de trajet (MPi) du véhicule à moteur.

3.  Procédé selon la revendication 1 ou 2, dans lequel ladite fonction (I) indiquant la vitesse d'accumulation est une fonction linéaire dans le temps qui est différente pour chaque type de parcours ou de trajet (MPi) du véhicule à moteur.

4.  Procédé selon l'une quelconque des revendications 1 à 3, dans lequel lesdits moyens de traitement et de contrôle (PCU, ECU) sont disposés de façon à interrompre une phase de régénération du filtre (PT) après l'écoulement d'un temps de travail (t*) prédéterminé depuis le commencement, lequel temps est variable de manière prédéterminée en fonction des types de parcours ou de trajet (MPi) effectués par le véhicule à moteur au cours de la régénération.

5.  Procédé selon les revendications 1 et 4, dans lequel lesdits moyens de traitement et de contrôle (PCE, ECU) sont disposés de façon à calculer, à la fin d'une phase de régénération du filtre (PT), la quantité résiduelle de particules imbrûlées dans le filtre (PT) en fonction du type de parcours ou de trajet effectué au cours de la régénération, et à poser la quantité résiduelle comme valeur initiale ($Q_0$) pour calculer la quantité (Q) de particules accumulées dans le filtre à partir de la fin de cette phase de régénération.

6.  Procédé selon la revendication 5, dans lequel lesdits moyens de traitement et de contrôle (PCU, ECU) sont disposés de façon à pouvoir calculer, au moyen d'une fonction d'estimation prédéterminée, la quantité résiduelle de particules imbrûlées ($Q_0$) dans le filtre (PT) en cas d'interruption d'une phase de régénération du filtre (PT) ou en cas d'arrêt du moteur (ICE) pendant une phase de régénération du filtre (PT).

FIG. 1

# FIG. 2

FIG.3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0859132 A1
- EP 1195508 A
- EP 1108866 A2